(19) Europäisches Patentamt
European Patent Office
Office européen des brevets

(11) EP 0 952 570 A1

(12) **EUROPEAN PATENT APPLICATION**

(43) Date of publication:
27.10.1999 Bulletin 1999/43

(51) Int Cl.$^6$: **G09G 3/36**, G02F 1/133

(21) Application number: 99302868.7

(22) Date of filing: **13.04.1999**

(84) Designated Contracting States:
**AT BE CH CY DE DK ES FI FR GB GR IE IT LI LU
MC NL PT SE**
Designated Extension States:
**AL LT LV MK RO SI**

(30) Priority: **24.04.1998 US 82896 P**

(71) Applicant: **Tektronix, Inc.
Wilsonville, OR 97070-1000 (US)**

(72) Inventors:
• **Ilcisin, Kevin J.**
Beaverton, Oregon 97007 (US)
• **Buzak, Thomas S.**
Beaverton, Oregon 97007 (US)

(74) Representative: **Burke, Steven David et al**
R.G.C. Jenkins & Co.
26 Caxton Street
London SW1H 0RH (GB)

(54) **Method of operating a plasma addressed liquid crystal panel to compensate for plasma potential**

(57) A PALC panel is operated in response to a video signal ($VIDEO_{in}$) according to which a nominal drive voltage V1 should be applied to a data drive electrode (12) on a first frame of the video signal and a nominal drive voltage V2 should be applied to the data drive electrode on a second frame of the video signal by applying an adjusted drive voltage ($V1 + V_{offset}$) to the data drive electrode during the first frame and applying an adjusted drive voltage ($-V2 + V_{offset}$) to the data drive electrode during the second frame.

FIG.4

EP 0 952 570 A1

## Description

<u>Cross Referenced to Related Applications</u>

This application claims the benefit of U.S. Provisional Application No. 60/082,896, filed April 24, 1998.

<u>Background of the Invention</u>

This invention relates to a method of operating a plasma addressed liquid crystal (PALC) panel to compensate for plasma potential.

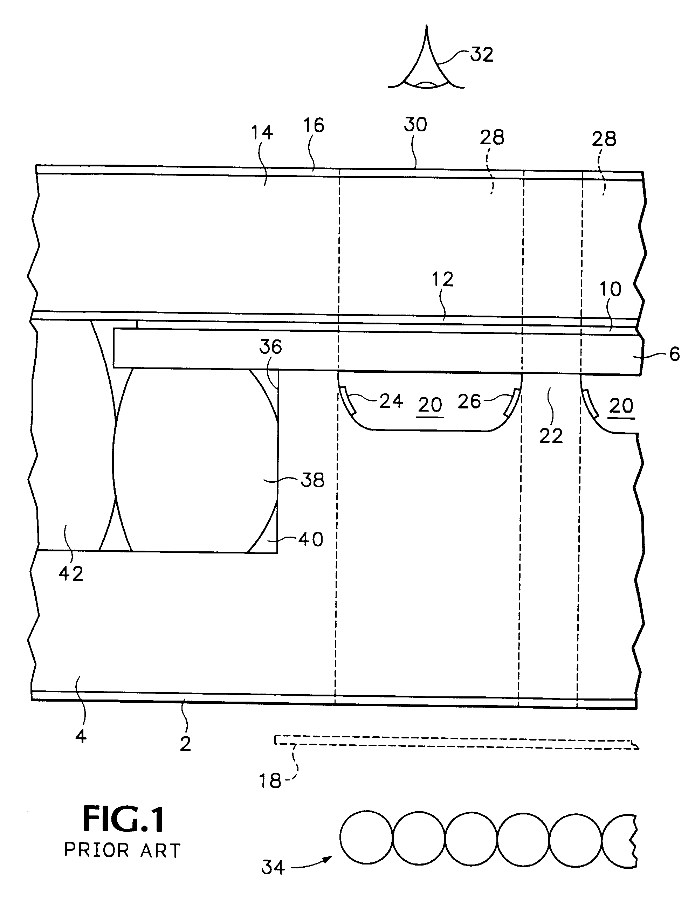

U.S. Patent 5,077,553 discloses apparatus for addressing data storage elements. A practical implementation of the apparatus shown in U.S. Patent 5,077,553 is illustrated schematically in FIG. 1 of the accompanying drawings.

The display panel shown in FIG. 1 comprises, in sequence from below, a polarizer 2, a channel member 4, a cover sheet 6 (commonly known as a microsheet), a layer 10 of electro-optic material, an array of parallel transparent data drive electrodes (only one of which, designated 12, can be seen in the view shown in FIG. 1), an upper substrate 14 carrying the data drive electrodes, and an upper polarizer 16. In the case of a color display panel, the panel includes color filters (not shown) between the layer 10 and the upper substrate 14. The panel may also include layers for improving viewing angle and for other purposes. The channel member 4 is typically made of glass and is formed with multiple parallel channels 20 in its upper main face. The channels 20, which are separated by ribs 22, are filled with an ionizable gas, such as helium. An anode 24 and a cathode 26 are provided in each of the channels 20. The channels 20 are orthogonal to the data drive electrodes and the region where a data drive electrode crosses a channel (when viewed perpendicularly to the panel) forms a discrete panel element 28. Each panel element can be considered to include elements of the layer 10 and the lower and upper polarizers 2 and 16. The region of the upper surface of the display panel that bounds the panel element constitutes a single pixel 30 of the display panel.

When the anode 24 in one of the channels is connected to a reference potential and a suitably more negative voltage is applied to the cathode 26 in that channel, the gas in the channel forms a plasma which provides a conductive path to the reference potential at the lower surface of the cover sheet 6. If a data drive electrode is at the reference potential, there is no significant electric field in the volume element of electro-optic material in the panel element at the crossing of the channel and the data drive electrode and the panel element is considered to be off, whereas if the data drive electrode is at a substantially different potential from the reference potential, there is a substantial electric field in that volume element of electro-optic material and the panel element is considered to be on.

It will be assumed in the following description, without intending to limit the scope of the claims, that the lower polarizer 2 is a linear polarizer and that its plane of polarization can be arbitrarily designated as being at 0° relative to a reference plane, that the upper polarizer 16 is a linear polarizer having its plane of polarization at 90°, and that the electro-optic material is a twisted nematic liquid crystal material which rotates the plane of polarization of linearly polarized light passing therethrough by an angle which is a function of the electric field in the liquid crystal material. When the panel element is off, the angle of rotation is 90°; and when the panel element is on, the angle of rotation is zero.

The panel is illuminated from the underside by an extended light source 34 which emits unpolarized white light. A rear glass diffuser 18 having a scattering surface may be positioned between the light source and the panel in order to provide uniform illumination of the panel. The light that enters a given panel element from the source is linearly polarized at 0° by the lower polarizer 2 and passes sequentially through the channel member 4, the channel 20, the cover sheet 6, and the volume element of the liquid crystal material toward the upper polarizer 16 and a viewer 32. If the panel element is off, the plane of polarization of linearly polarized light passing through the volume element of liquid crystal material is rotated through 90°, and therefore the plane of polarization of light incident on the upper polarizer element is at 90°. The light is passed by the upper polarizer element and the pixel is illuminated. If, on the other hand, the panel element is on, the plane of polarization of the linearly polarized light is not changed on passing through the volume element of liquid crystal material. The plane of polarization of light incident on the upper polarizer element is at 0° and therefore the light is blocked by the upper polarizer element and the pixel is dark. If the electric field in the volume element of liquid crystal material is intermediate the values associated with the panel element being off and on, light is passed by the upper polarizer element with an intensity which depends on the electric field, allowing a gray scale to be displayed.

In a practical implementation of the PALC display panel, the channel member 4 is etched back around the area in which the channels are formed in order to provide a plateau 36 in which the channels 20 are formed, and the cover sheet 6 is secured to the channel member by an endless frit bead 38 in a rabbet 40 extending around the periphery of the plateau. An upper substrate assembly, including the upper substrate 14 and the data drive electrodes 12 carried thereby, is attached to the channel member 4 by means of a glue bead 42.

Commercially available LC materials contain free ions. These free ions can affect the optical response of a panel element to the voltage applied to the data drive electrode. In order to minimize the effect of the free ions, it is conventional to reverse the polarity of the voltages applied to the data drive electrodes at a fixed frequency. In the case of a television display, for example, this frequency is 60 Hz. on alternate frames of the image. Thus, if the potential difference between a data drive electrode and the voltage reference $V_{ref}$ required to achieve a particular optical state is Vd, the effect of the free ions can be reduced by driving the data drive electrode to the voltage $V_{ref}+V_d$ on an odd frame and to the voltage $V_{ref}-V_d$ on an even frame.

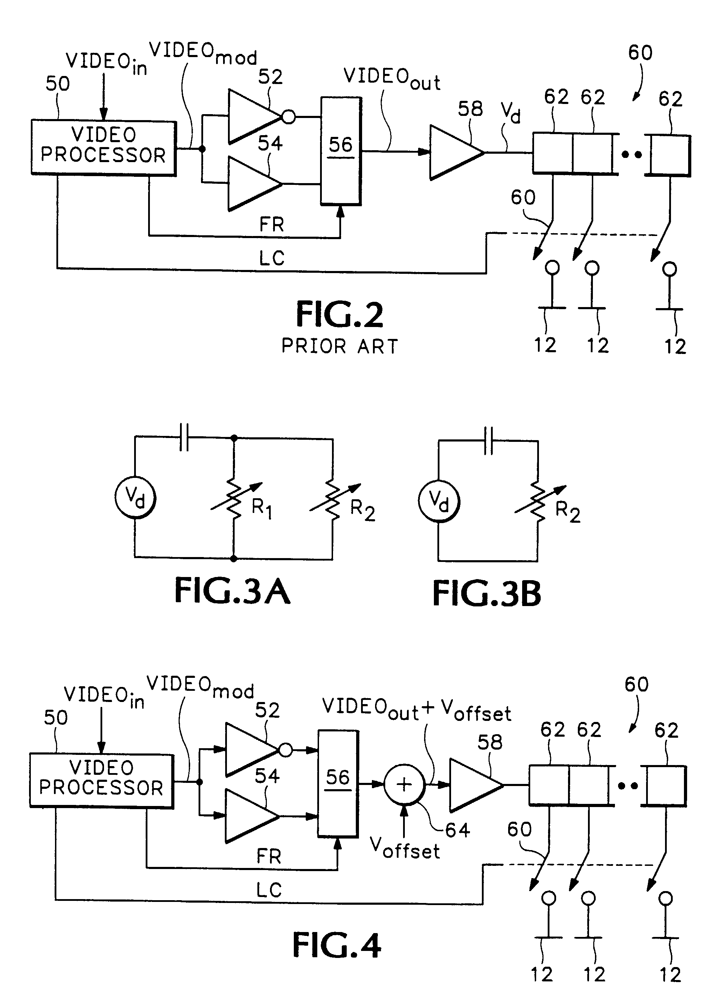

When the PALC display panel disclosed in U. S. Patent 5,077,553 is used as a raster scan display panel for displaying a raster scan video signal, the panel is oriented so that the channels extend horizontally and the data drive electrodes extend vertically. Referring to FIG. 2, the raster scan video signal $VIDEO_{in}$, which may be in accordance with a video standard such as NTSC, is supplied to a video processor 50 which generates a modified video signal $VIDEO_{mod}$ having suitable voltage levels for operation of the PALC display panel. The video processor also generates a frame switching signal FR, which changes state on consecutive frames of the video signal $VIDEO_{mod}$, and a line clock signal LC. The modified video signal $VIDEO_{mod}$ is supplied both to an inverter 52 and to a non-inverting buffer 54. A multiplexer 56 is controlled by the frame switching signal and selects the output of the buffer 54 on odd frames and the output of the inverter 52 on even frames. The output signal $VIDEO_{out}$ of the multiplexer is supplied to a data drive electrode driver 58.

The voltage signal $V_d$ at the output of the buffer 58 during the first active line of a frame of the video signal is supplied to a line store 60 having one storage element 62 associated with each data drive electrode 12, and each storage element stores the voltage to be applied to the associated data drive electrode during the first active line. When the line store 60 has been loaded, the storage elements 62 are connected to the respectively associated data drive electrodes 12 by switches 60, which are closed in response to the line clock signal LC, and the data drive electrodes 12 are driven to voltage levels $\{V_d\}$ that depend on the respective voltages stored in the storage elements. A negative-going strobe pulse is applied to the cathode in the first channel to establish a plasma in the first channel. In each panel element along the first channel, an electric field that establishes the optical state of the panel element is created between the data drive electrode and the lower surface of the cover sheet. The strobe pulse is removed, and the plasma is extinguished, but the electric field persists, maintaining the state of the panel element until the first channel is again addressed, on the next frame of the video signal. This sequence of operations is repeated in order for the remaining active lines of the frame and the remaining channels of the display panel.

The plasma that was created in the first channel is not extinguished instantaneously when the strobe pulse is removed, but decays over a finite interval. However, it is necessary for proper operation of a plasma addressed liquid crystal display panel that the plasma created in a channel be extinguished promptly after the strobe pulse is removed.

A plasma is considered to have decayed fully (or to be fully extinguished) if the voltage stored by the active panel element is at least 90 percent of the voltage that would have been stored if the gas in the inactive channel had not been ionized.

The horizontal line interval can conveniently be divided into an initiation interval, during which the plasma is formed in the channel; a capture interval, during which the panel element capacitors are charged to the voltage levels of the respective data drive electrodes; and a decay interval, which starts when the strobe pulse is removed and during which the gas reverts to its non-conductive state. The data drive electrodes are driven to the voltage levels associated with line N+1 of the video signal between the end of the decay interval of line N and the end of the initiation interval of line N+1, so that the change in voltage levels does not affect the panel element capacitors of line N but the data drive electrodes are at the proper levels before the start of the capture interval for line N+1.

It can be shown that in the event that the display panel disclosed in U.S. Patent 5,077,553 is used to display a video signal composed of 480 lines addressed at a frame rate of 60 Hz, the time that elapses between the start of the decay interval for line N and the start of the initiation interval for line N+1 is approximately 30 µs. Accordingly, the plasma created in a given channel must decay within approximately 30 µs after the strobe pulse is removed.

Helium is an advantageous choice for the ionizable gas in a plasma addressed liquid crystal display panel because it is inert and therefore does not react with the electrodes in the plasma channels. Also, helium is a favorable choice with respect to sputtering damage because the helium ions are light. However, helium is not without disadvantages as the ionizable gas in a PALC panel.

When a helium ion recombines with an electron to form a neutral helium atom, the helium atom may be in an excited state. The helium atom in the excited neutral state does not always pass directly to the ground state, but it may lose a small amount of energy radiatively and pass instead to an excited metastable state. The excited metastable helium atoms cannot decay radiatively through dipole transitions. One mechanism by which excited metastable helium atoms decay is by colliding with one another to produce a helium ion-electron pair and a neutral helium atom in the ground state. This secondary ionization delays complete extinction of the plasma.

Another mechanism by which a metastable helium atom in a PALC display panel decays is through collision with the walls of the channel. In the case of a plasma addressed liquid crystal display panel suitable for an NTSC display, the dimensions of the channels are such that metastable helium atoms will collide with the walls of the channel and revert to the ground state at a sufficient rate that the plasma will be considered to be fully extinguished within 30 μs after removal of the strobe pulse. Accordingly, the existence of the metastable state does not significantly degrade operation of a plasma addressed liquid crystal display panel when driven by an NTSC signal.

In the event that the PALC display panel is to be used to provide a high addressability display, such as an HDTV display, the number of lines of the display and the frequency at which the frame is refreshed are such that the plasma in a given channel must be reliably extinguished within about 8-16 μs after the strobe pulse is removed from the cathode. If helium alone is used as the ionizable gas, the existence and persistence of the metastable helium atoms impairs the viewability of the display.

Several mechanisms have been proposed for reducing the effect of the metastable helium atoms on the decay time of the plasma in a PALC display panel. Nevertheless, the metastable helium atoms still dominate the decay time of the plasma.

Summary of the Invention

During the capture interval, a sheath layer of electrons is formed on the dielectric surfaces bounding the plasma channel. This causes the underside of the cover sheet to be at a small negative potential with respect to ground. This plasma potential applies a DC offset to the otherwise AC drive signal.

In accordance with a first aspect of the invention there is provided a method of operating a PALC panel having a data drive electrode and a plasma channel, comprising receiving a video signal and generating a nominal drive voltage V1 to be applied to the data drive electrode on a first frame of the video signal and a nominal drive voltage V2 to be applied to the data drive electrode on a second frame of the video signal, applying an adjusted drive voltage (V1 + $V_{offset}$) to the data drive electrode during the first frame, and applying an adjusted drive voltage (-V2 + $V_{offset}$) to the data drive electrode during the second frame.

In accordance with a second aspect of the invention there is provided a method of operating a PALC panel having a data drive electrode and a plasma channel, comprising receiving a video signal according to which a nominal drive voltage V1 should be applied to the data drive electrode on a first frame of the video signal and a nominal drive voltage V2 should be applied to the data drive electrode on a second frame of the video signal, applying an adjusted drive voltage (V1 + $V_{offset}$) to the data drive electrode during the first frame, and applying an adjusted drive voltage (-V2 + $V_{offset}$) to the data drive electrode during the second frame.

In accordance with a third aspect of the invention there is provided a PALC panel having a plurality of data drive electrodes, a plasma channel and a drive circuit for driving the data drive electrodes in response to a video signal according to which a nominal drive voltage V1 should be applied to a given data drive electrode on a first frame of the video signal and a nominal drive voltage V2 should be applied to the given data drive electrode on a second frame of the video signal, wherein the drive circuit generates an adjusted drive voltage (V1 + $V_{offset}$) for application to the given data drive electrode during the first frame, and generates an adjusted drive voltage (-V2 + $V_{offset}$) for application to the given data drive electrode during the second frame.

Brief Description of the Drawings

For a better understanding of the invention, and to show how the same may be carried into effect, reference will now be made, by way of example, to the accompanying drawings, in which

FIG. 1 is a partial sectional view of a PALC display panel in accordance with the prior art,
FIG. 2 is a block diagram of a circuit used for driving the data drive electrodes of a PALC display panel in accordance with the prior art,
FIG. 3A is a schematic diagram of the equivalent circuit of a portion of a panel element of a PALC display panel during the decay phase of operation,
FIG. 3B is a simplified form of the schematic diagram shown in FIG. 3A, and
FIG. 4 is a block diagram of a circuit for driving the data drive electrodes of a PALC display panel in accordance with the present invention.
In the several figures of the drawings, like reference numerals are used to designate corresponding elements.

Detailed Description

It has been found for the case in which the ionizable gas is helium that the behavior of a panel element in a PALC display panel during the decay interval while the data voltage Vd remains constant can be modeled quite well by the circuit shown in FIG. 3A, where $R_1(t)$ (equal to $R_{10} * \exp(t/\tau_{d1})$) and $R_2(t)$ (equal to $R_{20} * \exp(t/\tau_{d2})$) account for the temporal evolution of the recombination and metastable decay processes respectively and CLC represents the panel element capacitor defined between the lower surface of the cover sheet and the data drive electrode. The time constant $\tau_{d1}$ is typically much smaller than $\tau_{d2}$. The resistor $R_2$ therefore dominates and the circuit shown in FIG. 3A can be simplified to the circuit shown in FIG. 3B.

It can be shown that the DC offset voltage on a panel element capacitor between two successive frames due to the sheath layer of electrons can be approximated by

$$V_{offset} = 2v_p * \exp\left(\frac{-\tau_{d2}}{\tau_0}\right)$$

where $V_p$ is the plasma potential and $\tau_o$ is a time constant associated with the initial conductivity of the plasma and is typically $10^{-9}$-$10^{-7}$s. The time constant $\tau_{d2}$ depends on the resistance of the plasma and the capacitance of the liquid crystal and cover sheet and is typically $0.5*10^{-6}$ - $5*10^{-6}$.

The DC offset voltage $V_{offset}$ is essentially independent of the data voltage and can therefore be eliminated by the addition of a small DC bias to the AC drive signal.

Referring to FIG. 4, the output of the multiplexer 56 supplies the signal to a first input of a summing element 64 which receives the voltage $V_{offset}$ at a second input and generates the signal VIDEO$_{out}$ + $V_{offset}$. The signal VIDEO$_{out}$ + $V_{offset}$ is supplied to the data drive electrode driver 58.

It will therefore be seen that on odd frames the data drive signal of the driver 58 is (VIDEO$_{mod}$ + $V_{offset}$) and on even frames the data drive signal is (-VIDEO$_{mod}$ + $V_{offset}$).

It will be appreciated that the invention is not restricted to the particular embodiment that has been described, and that variations may be made therein without departing from the scope of the invention as defined in the appended claims and equivalents thereof. For example, it will be appreciated that the circuit shown in FIG. 4 is purely schematic and is intended only to illustrate one way of generating the proper voltage levels based on the video signal VIDEO$_{in}$ and the voltage $V_{offset}$, and that there are many other ways of operating on the signals to generate the desired voltage levels. Instead of placing the multiplexer 56 at the outputs of the buffer 54 and inverter 56, it could be placed at the inputs. Although the operations of the components 52 and 64 have been described with reference to the analog signal domain, it will be appreciated that these operations could be performed in the digital signal domain, for example using one or more look-up tables, and that the resulting digital signal would then be converted to analog form using a digital-to-analog converter. Further, the inversion and offset operations may be performed algorithmically in the video processor.

## Claims

1. A method of operating a PALC panel having a data drive electrode (12) and a plasma channel, comprising:

   receiving a video signal (VIDEO$_{in}$) and generating a nominal drive voltage V1 to be applied to the data drive electrode on a first frame of the video signal and a nominal drive voltage V2 to be applied to the data drive electrode on a second frame of the video signal,
   applying an adjusted drive voltage (V1 + $V_{offset}$) to the data drive electrode during the first frame, and
   applying an adjusted drive voltage (-V2 + $V_{offset}$) to the data drive electrode during the second frame.

2. A method according to claim 1, wherein $V_{offset}$ is equal to $2V_p * \exp(-\tau_d/\tau_0)$ where $V_p$ is a plasma potential due to formation of a sheath of electrons on insulating surfaces of the plasma channel, $\tau_d$ is a plasma decay time constant and $\tau_o$ is a time constant associated with initial conductivity of the plasma.

3. A method according to claim 1, wherein $V_{offset}$ is equal to $2V_p * \exp(-\tau_d/\tau_0)$ where $V_p$ is a plasma potential, $\tau_d$ is a plasma decay time constant dependent on decay of excited metastable helium atoms, and $\tau_0$ is a time constant associated with initial conductivity of the plasma.

4. A method of operating a PALC panel having a data drive electrode (12) and a plasma channel, comprising:

   receiving a video signal (VIDEO$_{in}$) according to which a nominal drive voltage V1 should be applied to the data drive electrode on a first frame of the video signal and a nominal drive voltage V2 should be applied to the data drive electrode on a second frame of the video signal,
   applying an adjusted drive voltage (V1 + $V_{offset}$) to the data drive electrode during the first frame, and
   applying an adjusted drive voltage (-V2 + $V_{offset}$) to the data drive electrode during the second frame.

5. A method according to claim 4, wherein $V_{offset}$ is equal to $2V_p * \exp(-\tau_d/\tau_0)$ where $V_p$ is a plasma potential due to formation of a sheath of electrons on insulating surfaces of the plasma channel, $\tau_d$ is a plasma decay time constant and $\tau_o$ is a time constant associated with initial conductivity of the plasma.

6. A method according to claim 4, wherein $V_{offset}$ is equal to $2V_p * \exp(-\tau_d/\tau_0)$ where $V_p$ is a plasma potential, $\tau_d$ is a plasma decay time constant dependent on decay of excited metastable helium atoms, and $\tau_o$ is a time constant associated with initial conductivity of the plasma.

7. A PALC panel having a plurality of data drive electrodes (12), a plasma channel and a drive circuit for driving the data drive electrodes in response to a video signal ($VIDEO_{in}$) according to which a nominal drive voltage V1 should be applied to a given data drive electrode on a first frame of the video signal and a nominal drive voltage V2 should be applied to the given data drive electrode on a second frame of the video signal, wherein the drive circuit generates an adjusted drive voltage ($V1 + V_{offset}$) for application to the given data drive electrode during the first frame, and generates an adjusted drive voltage ($-V2 + V_{offset}$) for application to the given data drive electrode during the second frame.

8. A PALC panel according to claim 7, wherein $V_{offset}$ is equal to $2V_p * \exp(-\tau_d/\tau_0)$ where $V_p$ is a plasma potential due to formation of a sheath of electrons on insulating surfaces of the plasma channel, $\tau_d$ is a plasma decay time constant and $\tau_o$ is a time constant associated with initial conductivity of the plasma.

9. A PALC panel according to claim 7, wherein $V_{offset}$ is equal to $2V_p * \exp(-\tau_d/\tau_0)$ where $V_p$ is a plasma potential, $\tau_d$ is a plasma decay time constant dependent on decay of excited metastable helium atoms, and $\tau_o$ is a time constant associated with initial conductivity of the plasma.

**FIG.1**
PRIOR ART

## FIG.2
### PRIOR ART

## FIG.3A

## FIG.3B

## FIG.4

## EUROPEAN SEARCH REPORT

**European Patent Office**

Application Number

EP 99 30 2868

### DOCUMENTS CONSIDERED TO BE RELEVANT

| Category | Citation of document with indication, where appropriate, of relevant passages | Relevant to claim | CLASSIFICATION OF THE APPLICATION (Int.Cl.6) |
|---|---|---|---|
| A | WO 97 44774 A (PHILIPS ELECTRONICS NV ;PHILIPS NORDEN AB (SE)) 27 November 1997 (1997-11-27) * page 4, line 18 - page 5, line 2 * * page 19, line 20 - page 24, line 20; figure 8 * ----- | 1,4,7 | G09G3/36 G02F1/133 |

TECHNICAL FIELDS SEARCHED (Int.Cl.6)

G09G
G02F

The present search report has been drawn up for all claims

| Place of search | Date of completion of the search | Examiner |
|---|---|---|
| THE HAGUE | 10 August 1999 | Amian, D |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT
ON EUROPEAN PATENT APPLICATION NO.**

EP 99 30 2868

This annex lists the patent family members relating to the patent documents cited in the above-mentioned European search report.
The members are as contained in the European Patent Office EDP file on
The European Patent Office is in no way liable for these particulars which are merely given for the purpose of information.

10-08-1999

| Patent document cited in search report | Publication date | Patent family member(s) | Publication date |
|---|---|---|---|
| WO 9744774 A | 27-11-1997 | EP 0852787 A | 15-07-1998 |
| | | US 5841411 A | 24-11-1998 |

EPO FORM P0459

For more details about this annex : see Official Journal of the European Patent Office, No. 12/82